(19) Europäisches Patentamt
European Patent Office
Office européen des brevets

(11) EP 1 162 243 B1

(12) EUROPEAN PATENT SPECIFICATION

(45) Date of publication and mention of the grant of the patent:
**03.08.2005 Bulletin 2005/31**

(51) Int Cl.[7]: **C09D 11/10**

(21) Application number: **00810493.7**

(22) Date of filing: **07.06.2000**

# (54) UV curable composition

Durch UV-Strahlung härtbare Zusammensetzung

Composition réticulable par UV

(84) Designated Contracting States:
**AT BE CH CY DE DK ES FI FR GB GR IE IT LI LU MC NL PT SE**
Designated Extension States:
**LT**

(43) Date of publication of application:
**12.12.2001 Bulletin 2001/50**

(73) Proprietor: **SICPA HOLDING S.A.**
**1008 Prilly (CH)**

(72) Inventors:
- **Vuarnoz, Aline**
  **1747 Corserey (CH)**
- **Veya, Patrick**
  **1110 Morges (CH)**

(74) Representative: **Hepp, Dieter et al**
**Hepp, Wenger & Ryffel AG,**
**Friedtalweg 5**
**9500 Wil (CH)**

(56) References cited:
**EP-A- 0 668 332**
**EP-A- 0 688 838**
**FR-A- 2 745 294**
**US-A- 5 889 084**

- **FALBE J.; REGITZ M.: 'Römpp Chemie Lexikon, Band 6, pages 4936-4939', 1992, GEORG THIEME VERLAG, STUTTGART ** NEW YORK**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 162 243 B1

## Description

The present invention relates to a composition, to the use of a composition for forming layers on substrates which after UV-curing are removable upon scratching, to security documents carrying such layers and to a method for temporarily hiding underlying information on a document according to the preambles of the independent claims.
Scratch off layers are mostly applied to documents in order to temporarily hide underlying information, such as number combinations, symbols, text, etc. One preferred field of applications are their use for lottery tickets.
Scratch off layers have to combine in certain aspects contradictory characteristics. On the one side the dried layers have to show good mechanical resistance to physical damages during manufacturing, shipment and storage in order to fulfil performance and when necessary security aspects. On the other side the layer must be removable by scratching with a coin or fingernail. Thus the adhesion to the underlying substrate and the hardness of the layer must not adversely affect the scratch off properties. In addition, contrary to decals, the adhesive strength of the layer to the underlying substrate must be greater than the cohesive strength within the film. This guarantees that the layer cannot be removed as a whole by a potential forger and reapplied after having read or counterfeited the underlying information.
Compositions adapted for forming scratch off layers, so called abrasion-removable or scratch off compositions, have been already described in DE 3614653, EP 688 838, EP 233 007 and US 5,215,576.
Typical scratch off inks are currently prepared from either polar or apolar elastomeric polymeric resins in benzine-type, or alcohol-type solvents or from dispersions containing to a certain amount water as disperse agent. Due to considerable amount of solvent the inks exhibit a long drying time. The dried ink layers suffer from ageing problems, caused by the reaction of oxygen with unsaturated double bonds which can be present in film-forming resins e.g. in styrene butadiene copolymers which are used in benzine-based and aqueous ink compositions. As a result the resin loses its elastic properties which to a certain extent are necessary for the layer to be scratched off . Consequently the layer is very difficult to scratch after prolonged time of storage. Up to now the problem is solved by adding anti-oxidizing agents to the scratch-off composition. However, anti-oxidants have a short lifetime by themselves and thus the ageing problem is just postponed.
UV curing printing inks are applied in a wide range of applications due to their favourable properties concerning environmental, performance and economy aspects.
Compared to air-dry, ambient-cure systems which employ resins drying by oxypolymerisation or baked systems using thermoset resins, UV curing systems can be produced with a low content of volatile organic carbon (VOC) and thus meeting even strict environmental rules.
In view of performance, UV curing systems are known and highly appreciated for their excellent adhesion to a wide variety of substrates, including metals, laminates, plastics, paper, cardboard, glass, etc.. The cured films exhibit an excellent combination of hardness and flexibility, excellent abrasion and chemical resistance (see EP 799 871), show a very low shrinkage upon curing, have excellent waterproof properties and are odourless after UV cure. Furthermore the high energy efficiency of UV curing systems translates to smaller equipment, less floor space, lower operating costs and lower maintenance expenses. Due to all these advantages there is a constant effort to expand this technology in new fields of applications and new printing processes.
In FR-A-2 745 294, an UV-curing magnetic ink is described which should prevent the theft of articles in shops. It is not suggested to use that ink for the provision of scratch-off layers.
Due to their noteworthy adhesion and hardness, UV curing systems were deemed unsuitable for scratch off layers.
It is the object of the present invention to overcome the drawbacks of the prior art.
In particular it is an object of the invention to provide a scratch off composition curable by electromagnetic radiation in the UV range.
It is a further object of the present invention to provide scratch off layers which do not exhibit a decrease in scratchability with increasing storage time.
It is a further object of the present invention to provide low solvent, low viscous printing inks adapted for forming scratch off layers.
It is a further object of the invention to provide a security document with temporarily hidden information.
These objects are solved by the features of the characterising parts of the independent claims.
In particular the objects are solved by the use of a composition for forming layers on substrates being removable upon scratching after curing, comprising film forming components, at least one photoinitiator, components being insoluble in the composition, additives and optionally at least one solvent. Said film forming components comprise at least one first organic molecule with at least one epoxy group and at least one second organic molecule with at least one nucleophilic group. Said nucleophilic group is crosslinkable with said epoxy group of said first organic molecule upon irradiation with electromagnetic radiation in the ultraviolet (UV) range of the electromagnetic spectrum. The components being insoluble in the composition comprise at least one pigment. The weight ratio (r) of the film forming components to the components in the composition is in the range of between 0.35 to 0.95.

Such a scratch off composition has to be formulated with regard to optimize the combination of elasticity, fragility and good mechanical resistance of the cured layers.

The fragility of the cured layer which is a requirement for an easy and clean scratching is the consequence of the weight ratio (r) of the crosslinked film forming components and the components insoluble in the composition. The composition can comprise additional insoluble components such as fillers.

When r is increasing, the ratio of the sum of film forming components versus the sum of the insoluble components increases, and the cured layer is getting more and more difficult to scratch off properly: it peals off in its entirety comparable to a decal. When r is decreasing the cured layer is too easily scratched off and thus the risk of damage during production, handling and storage is too high. Summarized both effects adversely affect the hiding capacity of the cured layer.

The term "film" is defined according to DIN EN 971-1:1996-09 and stands for a coherent coating, which is formed by the application of one or more layers on an underlying substrate. The term "film forming components" is defined according to DIN 55945:1996-09 and indicate those components of the composition which participate in forming a coherent film.

The term "film forming" according DIN 55945:1996-09 is the generic term for the transition of an applied coating from the liquid to the solid state. Film forming is the result of physical drying by penetration of liquid components into the underlying substrate and/or evaporation of volatile components and/or chemical curing. All processes can perform exclusively or simultaneously or one after the other depending on the drying/curing mechanism and the type of substrate.

Although the physical drying of the film forming components should not be excluded in total, the main film forming reaction in the context of the present invention is based on chemical curing, i.e. crosslinking of functional groups upon irradiation with wavelength in the UV-range of the electromagnetic spectrum. In particular the film forming process in the present invention is mainly caused by UV induced cationic polymerisation.

Substances insoluble in the composition are mainly fillers and pigments.

The term "filler" is defined according to DIN 55943:1993-11 and DIN EN 971-1:1996-09. Filler is a substance in granular or pulverized form, which is insoluble in the other components of the coating composition and is used to provide or influence certain physical properties of the overall composition.

The term "pigment" is to be understood according to the definition given in DIN 55943:1993-11 and DIN EN 971-1:1996-09. Pigments are colouring materials in powder or flake form which are - contrary to dyes - not soluble in the surrounding medium. Functional pigments such as magnetic-, corrosion inhibiting- and/or electroconductive pigments may be employed as well.

In the context of the present invention the term "powder pigment" stands for all those pigments with irregular shape and contour. Irregular shape is to be understood as the contrary to flake pigments. Flake pigments have first and second parallel planar surfaces which allows a parallel orientation of the entire pigment to the surface of the underlying substrate and to other flake pigments. Mostly the flakes are produced from sheets which are comminuted to the desired flake size, and thus causing only the edges, i.e. the sides perpendicular to the first and second surfaces to be of irregular contour. The pigment orientation is the result of the drying process of the coating composition (see Romp Lack- und Druckfarben, ed.: U.Zorll, Georg Thieme Verlag, Stuttgart 1988, p. 451/452).

Suitable for the composition of the present invention are both: powder and flake pigments. Particularly preferred powder pigments are white and black pigments.

In case powder pigments are incorporated in the scratch off composition of the present invention, r-values in the range of 0,4 to 0,7, particularly in the range of between 0,48 to 0,65 leading to preferred properties.

Preferred flake pigments in a composition of the present invention are selected from the group consisting of lustre pigments. Lustre pigment is a generic term and comprises metal-effect pigments, interference pigments, e.g. pigments changing colour with viewing angle and pearl lustre pigments. Preferably metal effect pigments and of those particularly aluminium pigments are applied. Scratch off compositions having incorporated flake pigments do show a preferred performance with r-values in the range of between 0,55 to 0,85 and even more preferably in the range of 0,6 to 0,78.

The term "nucleophilic" shall stand as generic term for all those functional groups which provide an electron pair for the formation of a new chemical bond.

A further factor influencing the scratchability of the cured layer produced by the use of a composition of the present invention is given by the ratio of the epoxy equivalence to the equivalence of the nucleophilic groups (R):

$$R = \frac{\text{first organic molecule (g)/epoxy eq wt}}{\text{second organic molecule (g)/nucleophilic group eq wt}} = \frac{\text{epoxy eq}}{\text{nucleophilic group eq}}$$

g = gram; eq = equivalent; wt = weight

Particular good scratch off properties can be achieved by an equivalent ratio R not greater than 5.5.

When R is increasing the ratio of epoxy equivalence particularly versus hydroxy equivalence is increasing, the scratch off ink layer is getting harder to scratch off: it brittles into some dusty material and does not come off the underlying substrate in "one piece".

By describing the abraded section of the cured layer as coming off in "one piece" it is particularly intended that the dimension of the abraded section is dependent on the dimension of the scratching tools. The dimension e.g. the width of the abraded "one piece" is defined by the width of the scratching tool used, whereas the length of the abraded "one piece" depends on the scratched distance.

Comparable to the r-values, the R-values are influenced by the type of pigment employed in the composition, too. In case of powder pigments the equivalent ratio of the epoxy groups to the nucleophilic groups (R-values) is in the range of between 1,5 to 4,5, preferably between 2,0 to 4,0 and even more preferably in the range of between 1,5 to 3,5.

Ranges of R-values in case of flake pigments are optimized between 2,0 to 5,4 and preferably between 3,0 to 5,0.

Preferably the second organic molecule contains at least one hydroxyl-group as nucleophilic group, i.e. belongs to the chemical class of polyols. Even more preferably the second organic molecule does not contain other functional groups than hydroxyl groups.

The elasticity of a cured layer provided by the use of a composition of the present invention is mainly dependent on the nature of the polyol.

Favorable to the scratch off properties are weight average molecular weights of the second organic molecule in the range of between 1000 g/mol and 200 g/mol, preferably between 800 g/mol and 250 g/mol.

Particular good properties with regard to the scratchability of the cured layer are achieved by selecting the second organic molecule from the group consisting of aliphatic polyester-polyols, in particular caprolactone-based diols and caprolactone-based triols, polytetrahydrofuran-based diols, polyether-polyols, and in particular polyethylenglycols and polypropylenglycols, further ethoxylated sorbitan, propoxylated sorbitan, ethoxylated sorbitols, propoxylated sorbitols, ethoxylated trimethylolpropane, propoxylated trimethylolpropan, ethoxylated pentaerithritol, propoxylated pentaerithritol.

These diols and triols have been chosen according to their low viscosity. Favorable to the formulation of UV curing scratch-off inks, the viscosity of the polyols does not exceed 500 m Pa*s (Brookfield, 25°C).

Preferably the weight average molecular weight of the first organic molecule is in the range of between 150 to 500 g/mol, preferably of between 160 to 420 g/mol and even more preferably of between 200 to 380 g/mol.

In a further preferred embodiment of the present invention the first organic molecule is selected from the group consisting of aliphatic epoxy monomers, cycloaliphatic epoxy monomers and/or oligomers. Particularly preferred are glycidylethers as those supplied by WITCO and/or polytetrahydrofuranglycidylethers as those supplied by EMS, 3,4-epoxycyclohexylmethyl-3,4-epoxycyclohexane and/or bis-(3,4-epoxycyclohexyl)adipate as those supplied by UCAR.

In a preferred embodiment of the present invention the fillers and/or pigment have low oil-absorption values. Low oil-absorption values are favourable in keeping the viscosity of the overall composition as low as possible. Low viscosity is a prerequisite for many application techniques, such as printing processes, spraying, brushing, roll coating. In particular the oil-absorption value may not exceed 18g/100 g, preferably not exceed 14g/100 g and even more preferably does not exceed 13g/100 g.

The photoinitators which are applied when using a composition of the present invention are selected from the class of aryliodonium, arylsulfonium and isopropylthioxanthone compounds of the following formulas:

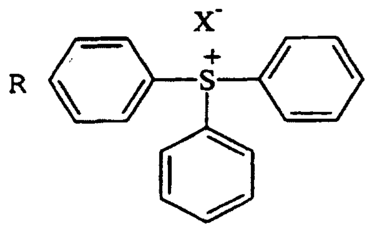

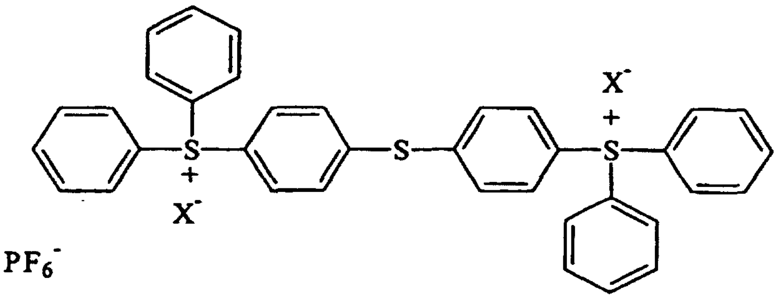

$X^- = PF_6^-$

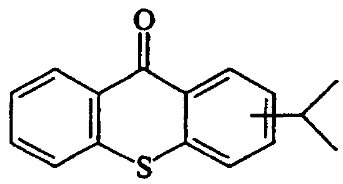

Isopropylthioxanthone ITX

R = H, alkyl-group with C = 1 to 5

These compounds are highly thermally stable and upon irradiation liberate strong Broensted acids of the HX type which are capable of initiating subsequently the cationic polymerisation of the oxiran (epoxy) rings. The polymerisation is initiated by the formation of a carbonium ion under the influence of the Broensted acid. The carbonium ion can react under chain propagation with further oxiran (epoxy) rings, and/or with double bonds present in α-position to an oxygen atom and/or with nucleophilic groups, preferably with hydroxy groups of the second organic molecule.

Vinylether monomers which have oxygen atoms in α-position are known to be reactive under UV radiation with molecules containing epoxy groups.

In the context of the present invention their admixture to the epoxy content results in increased cure speed, but should not exceed 20 to 25 weight-% of the total weight of the epoxy molecules.

In spite of rather high filler and/or pigment content the vinylethers develop their cure speeding effects, even under the condition that the weight-% of the vinylethers are not exceeding 5 weight-% of the weight of the overall composition.

The solvents suitable for the use of a composition of the present invention may be present in an amount not exceeding 10 % of the weight of the overall composition. They are added to adjust the final viscosity of the composition to the application method. The solvents employed are selected from the class of volatile organic solvents, preferably of the polar type but not having functional groups which are reactive towards the film forming components. Examples of solvents are diethylenglycoldimethylether, dialkyl glycols, alkyl glycolesters or any aprotic solvent.

Since cationic polymerisation is very sensitive to humidity, humidity must be kept as low as possible.

Additional IR-driers can be added to the composition to improve drying speed.

According to the present invention there is furthermore provided a coating composition as a printing ink having the above-described composition and wherein its viscosity is not exceeding 2.0 Pa.s, preferably not exceed 1.6 Pa.s and even more preferably not exceed 1.3 Pa.s when measured at 20°C, and the solvent content being limited to 10 weight % of the overall composition, preferably less than 5 weight %. Most of the printing processes such as flexo-, gravure-, screen printing need rather low viscosities.

The composition of the invention further comprises additives as they are usually employed such as surfactants, passive resins, i.e. macromolecules which are not reactive with the film forming components, rheology modifiers, waxes, soluble dyes, synergists, etc..

Part of the present invention is further the use of a composition for forming layers on substrates which - after curing - are removable upon scratching and curable upon irradiation with electromagnetic radiation in the UV-range of the electromagnetic spectrum. Such a composition comprises 10 - 25 weight-%, preferably 10 to 20 weight-% of a first organic molecule having at least one epoxy group, 3 to 20 weight-%, preferably 8 to 15 weight-% of a second organic molecule having at least one, preferably two hydroxyl- groups and 40 to 70 weight-%, preferably 50 to 65 weight-% of substance insoluble in the composition, particularly pigments and/or fillers.

The use of such a composition is particularly preferred in combination with one or more of the features and embodiments of the present invention as described hereinbefore.

A composition of the present invention is particularly suitable for a security document which comprises at least one scratchable UV-cured layer for temporarily hiding underlying information. In the context of the present invention the term security document shall stand for all those documents containing information which shall not be assessable to unauthorised persons. Usually the authorisations in this field of application are acquired by paying a certain amount of money , e.g. purchasing lottery tickets. Compositions of the present invention are further employed for advertisement reasons or product promotion. As one example encapsulated fragrancies to be promoted may be blended into a composition of the present invention and the fragrance is set free upon scratching.

A cured layer produced by a composition of the present invention is resistant to ageing effects adversely affecting the scratchability of the cured layer. Thus (security) documents comprising a cured layer produced by a composition of the present invention can be stored at least one year and in most cases remain scratchable during more than three years under standard conditions (25°C ± 5°C; 65% ± 15% humidity).

Part of the present invention is further a method for temporarily hiding underlying information on a document comprising the following steps:

a) providing a composition for forming a scratch-off layer with the features described hereinbefore, particularly A composition for forming layers on substrates being removable upon scratching after curing, comprising film forming components, at least one photoinitiator, components being insoluble in the composition, additives and optionally at least one solvent, characterized in that said insoluble components comprise at least one pigment and said film forming components comprise at least one first organic molecule having at least one epoxy group and at least one second organic molecule having at least one nucleophilic group being cross-linkable with said epoxy group of said first organic molecule upon irradiation with electromagnetic radiation in the ultraviolet range of the electromagnetic spectrum, wherein the weight ratio of the film forming components to the insoluble components is in the range of between 0.35 to 0.95.

b) optionally applying a release varnish which in a preferred embodiment is UV-curing itself, to the part of the document on which the composition will be applied;

c) applying the composition provided in step a) either on top of the release varnish applied in step b) or directly to the underlying document, preferably by a flexo-, screen printing-or gravure-printing process, in order to hide the underlying information;

d) curing of the printed composition applied in step c) by irradiation with light having wavelengths in a range of between 240 nm and 420 nm. The irradiation should be at least for 0,25-0,5 s at 25°C, in case the irradiation takes place at higher temperatures the irradiation length will be shortened correspondingly. Temperature and irradiation duration depend on the ratio and nature of the film forming components and on the solvent.
The cured layer of step d) may be removed by scratching with a scratching tool such as a coin and fingernail.

Part of the present invention is further a cured layer on a substrate produced with a composition being cross-linked by radiation in the ultraviolet range of the electromagnetic spectrum after application to the substrate for temporarily hiding underlying information and for revealing said information upon scratching.

The present invention will be further illustrated by the following examples and by the drawings:

Figure 1 is a graphical illustration of the r- and R-values of the formulations B1-B9,

Figure 2 is a graphical illustration of the r- and R-values of the formulations W1-W9 and WBC,

Figure 3 is a graphical illustration of the r- and R-values of the formulations S1-S9.

**Examples:**

For each UV-curing scratch-off ink - black (B1-B9), white (W1-W9; WBC) and silver (S1-S9) - a plurality of examples have been formulated with different ratios R and r. In order to identify the limited domain of R and r each example was printed, dried and evaluated with respect to print quality, covering, drying efficiency, scratch-off properties.

The selection of the monomers and the ratio r and R are determined by the following tests:

- Test for momoner's compatibility with other components in the ink:
The monomer's compatibility with other components in the ink is tested by formulating the ink and checking for general problems such as solubility of additives with the monomers, printing quality, pigments wetting, separation

on storage, etc.

- Drying test:
  The drying is evaluated by applying a thumb to the surface, turning right and left with a force of 3kg ± 0.5kg applied on the area of the layer covered by the thumb. If no marks are left on the surface derived from the thumb, the drying is good. The test is made immediately after the UV-drying and repeated 24 hours after.

- Scratching test:
  Using a fingernail or a coin, the scratch must be easy and clean. The scratch-off ink must come off in one piece like rubber. The ink should not be brittle.

- Scratch resistance test:
  The scratch-off ink surface must be enough resistant to physical damages during printing, cutting, handling or packaging operations.

- Delamination test:
  By attempting to remove and replace the scratch-off ink layer by using adhesive tape for example, enough ink should remain on the release varnish in order to protect the variable information underneath.

- Ageing test:
  The scratch-off ink layer must be easily scratched-off even after one month at 60°C .

For all formulations it has been found that, when R is increasing, the ratio of epoxy equivalent versus polyol equivalent monomers/oligomers is increasing, the scratch-off ink layer is getting harder to scratch-off: it brittles into some unpleasant dusty material. On the other hand, when R is decreasing the ratio of epoxy equivalent versus polyol equivalent monomers/oligomers is closer to 1,0, the scratch-off ink layer is getting more and more elastic. But, when the concentration of polyols monomers is too high the ink does not dry properly.

When r is increasing, the ratio of the total mass of epoxy and polyol monomers/oligomers versus filler/pigment is increasing, the scratch-off ink layer is getting more and more difficult to scratch-off properly: it peels off in one very elastic piece. This has dramatic consequences on security requirements when attempting to fraud lottery tickets using adhesive tape: the ink layer is easily removed and put on again. On the other hand, when r is decreasing, the scratch-off layer is too easily scratched-off, and damaged already during printing and manufacturing operations.

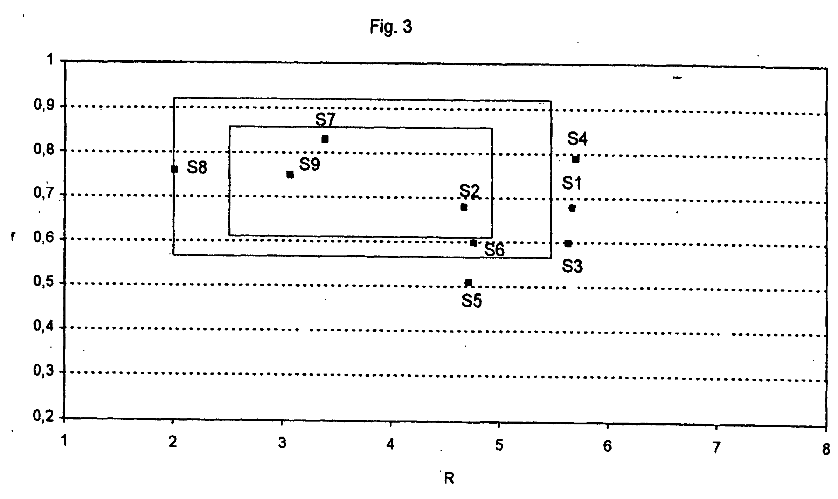

In the figures 1 to 3 which are the graphical illustrations of the examples (fig. 1: B1-B9; fig. 2: W1-W9 and WBC; fig. 3: S1-S9), those formulations showing good properties with regard to the test described hereinbefore are enclosed by the inner square. The formulations which give still acceptable results are included in the outer square.

**Examples B1 - B9:**

## Black UV-curing scratch-off inks:

| Examples | B1 | B2 | B3 | B4 | B5 |
|---|---|---|---|---|---|
| | R=4.79 | R=3.93 | R=3.74 | R=3.68 | R=2.90 |
| | r=0.42 | r=0.31 | r=0.50 | r=0.61 | r=0.31 |
| Solsperse 24000SC | 3.1 | 3.1 | 3.1 | 3.1 | 3.1 |
| Cyracure UVR-6110 | 17.6 | 17.6 | 17.6 | 17.6 | 17.6 |
| Cyracure UVR-6105 | 59.1 | 49.1 | 64.1 | 69.1 | 44.1 |
| Sonderruss 30 | 19.7 | 19.7 | 19.7 | 19.7 | 19.7 |
| Cyracure UVR-6128 | 69.1 | 49.1 | 69.1 | 79.1 | 44.1 |
| Eurepox RV-H | 34.7 | 19.7 | 34.7 | 44.7 | 14.7 |
| PolyTHF-650 | 76.7 | 71.7 | 101.7 | 116.7 | 86.7 |
| Cyracure UVI-6990 | 78.0 | 78.0 | 78.0 | 78.0 | 78.0 |
| Barium sulphate | 589.0 | 639.0 | 559.0 | 519.1 | 639.0 |
| Diethylenglycol dimethylether | 50.0 | 50.0 | 50.0 | 50.0 | 50.0 |
| Byk 307 | 1.0 | 1.0 | 1.0 | 1.0 | 1.0 |
| Dow Corning Additive 57 | 2.0 | 2.0 | 2.0 | 2.0 | 2.0 |
| Total | 1000.0 | 1000.0 | 1000.0 | 1000.0 | 1000.0 |

| Examples | B6 | B7 | B8 | B9 |
|---|---|---|---|---|
| | R=3.74 | R=2.92 | R=2.81 | R=5.63 |
| | r=0.42 | r=0.42 | r=0.50 | r=0.50 |
| Solsperse 24000SC | 3.1 | 3.1 | 3.1 | 3.1 |
| Cyracure UVR-6110 | 17.6 | 17.6 | 17.6 | 17.6 |
| Cyracure UVR-6105 | 59.1 | 54.1 | 59.1 | 74.1 |
| Sonderruss 30 | 19.7 | 19.7 | 19.7 | 19.7 |
| Cyracure UVR-6128 | 59.1 | 54.1 | 59.1 | 79.1 |
| Eurepox RV-H | 29.7 | 24.7 | 29.7 | 39.7 |
| PolyTHF-650 | 91.7 | 106.7 | 121.7 | 76.7 |
| Cyracure UVI-6990 | 78.0 | 78.0 | 78.0 | 78.0 |
| Barium sulphate | 590.0 | 589.0 | 559.0 | 559.0 |
| Diethylenglycol dimethylether | 50.0 | 50.0 | 50.0 | 50.0 |
| Byk 307 | 1.0 | 1.0 | 1.0 | 1.0 |
| Dow Corning Additive 57 | 2.0 | 2.0 | 2.0 | 2.0 |
| Total | 1000.0 | 1000.0 | 1000.0 | 1000.0 |

**Preparation:**

The 4 first components, Solsperse 24000SC, Cyracure UVR-6110 and 6105 and pigment Sonderuss 30, were mixed and ground three times on a three-roll-mill. The pigment paste was then dispersed with the other components using a lab-mixer (Dispermat). Solsperse 24000SC is an efficient dispersing medium for UV-curable inks. It improves

pigment dispersion and decreases the ink viscosity. Sonderuss 30 is a special black pigment for UV-curable ink . Cyracure UVI-6990 is a triaryl-sulfonium photoinitiator which contains a hexafluorophosphate anion. Blanc fixe N is a baryum sulfate filler with low oil absorption values. The diethylenglycol dimethylether is used to keep the final viscosity as low as required. BYK 307 is a defoaming agent and Dow Corning 57 is a slipping agent.

Example B3 has a final viscosity of 1.10 Pa's. The inks were tested on a flexographic press over two layers of a UV-curable release varnish.

As can be seen from figure 1 the r and R values for black UV scratch off ink giving good results are from r = 0.41 to 0.75, especially from 0.42 to 0.61, in particular in combination with R = 2.0 to 4.0.

**Examples W1 - W9**

**White UV-curing scratch-off inks:**

| Examples | W1<br>R=1.91<br>r=0.495 | W2<br>R=4.71<br>r=0.495 | W3<br>R=2.83<br>r=0.49 | W4<br>R=3.76<br>r=0.49 | W5<br>R=2.79<br>r=0.63 |
|---|---|---|---|---|---|
| Solsperse 24000SC | 3.9 | 3.9 | 3.9 | 3.9 | 3.9 |
| Cyracure UVR-6110 | 62.0 | 100.0 | 80.0 | 90.0 | 100.0 |
| TiO2 | 280.0 | 280.0 | 280.0 | 280.0 | 280.0 |
| PolyTHF-650 | 160.0 | 97.0 | 132.0 | 112.0 | 155.0 |
| Cyracure UVR-6105 | 65.0 | 90.0 | 75.0 | 85.0 | 80.0 |
| Baryum sulphate | 300.0 | 300.0 | 300.0 | 300.0 | 252.0 |
| Isopropylthioxanthone ITX | 7.1 | 7.1 | 7.1 | 7.1 | 7.1 |
| Cyracure UVI-6990 | 70.0 | 70.0 | 70.0 | 70.0 | 70.0 |
| Diethylenglycol dimethylether | 50.0 | 50.0 | 50.0 | 50.0 | 50.0 |
| Dow Corning Additive 57 | 2.0 | 2.0 | 2.0 | 2.0 | 2.0 |
| Total | 1000.0 | 1000.0 | 1000.0 | 1000.0 | 1000.0 |

| Examples | W6<br>R=2.92<br>r=0.38 | W7<br>R=2.33<br>r=0.54 | W8<br>R=4.27<br>r=0.54 | W9<br>R=3.33<br>r=0.60 | WBC<br>R=4.67<br>r=0.75 |
|---|---|---|---|---|---|
| Solsperse 24000SC | 3.9 | 3.9 | 3.9 | 3.9 | 8.0 |
| Cyracure UVR-6110 | 70.0 | 75.0 | 100.0 | 110.0 | 102.0 |
| Cyracure UVR-6128 | - | - | - | - | 156.0 |
| TiO2 | 300.0 | 280.0 | 280.0 | 280.0 | 495.0 |
| PolyTHF-650 | 107.0 | 155.0 | 110.0 | 137.0 | 106.0 |
| Cyracure UVR-6105 | 60.0 | 75.0 | 95.0 | 80.0 | 80.0 |
| Barium sulphate | 330.0 | 282.0 | 282.0 | 260.0 | 252.0 |
| Isopropylthioxanthone ITX | 7.1 | 7.1 | 7.1 | 7.1 | 8.0 |
| Cyracure UVI-6990 | 70.0 | 70.0 | 70.0 | 70.0 | 74.0 |
| n-Propanol | - | - | - | - | 43.0 |
| Diethylenglycol dimethylether | 50.0 | 50.0 | 50.0 | 50.0 | - |
| Dow Corning Additive 57 | 2.0 | 2.0 | 2.0 | 2.0 | 8.0 |
| Total | 1000.0 | 1000.0 | 1000.0 | 1000.0 | 1000.0 |

WBC: white base coat from UCAR (Cyracure: cycloaliphatic epoxides, p.31, 1995).

However, WBC with R = 4.71 and r = 0.75 was very difficult, almost impossible to scratch off.

The preparation of the W1-W9 and WBC was performed as for the examples B1-B9. The viscosity for formulation W3 was 1.75 Pa's.

Figure 2 is the graphical illustration of the r and R ranges of the examples. An r-range of between 0.4 and 0.7 leads to favorable properties in particular in combination with an R-range of between 2.0 and 4.0. Still acceptable results are obtained with r-ranges of 0.35 to 0.75 particularly in combination with R-ranges of between 1.5 to 4.

**Examples S1 - S9**

**Silver UV-curing scratch-off inks:**

| Examples | S1 | S2 | S3 | S4 | S5 |
|---|---|---|---|---|---|
| | R=5.66 | R=4.67 | R=5.63 | R=5.70 | R=4.71 |
| | r=0.68 | r=0.68 | r=0.60 | r=0.79 | r=0.51 |
| Silvet 320-20-J | 50.0 | 50.0 | 50.0 | 50.0 | 50.0 |
| Cyracure UVR-6110 | 150.0 | 125.0 | 140.0 | 160.0 | 116.0 |
| Cyracure UVR-6105 | 100.0 | 100.0 | 90.0 | 113.0 | 80.0 |
| PolyTHF-650 | 106.0 | 121.0 | 98.0 | 115.0 | 100.0 |
| TiO2 | 100.0 | 100.0 | 100.0 | 100.0 | 100.0 |
| Cyracure UVI-6990 | 70.0 | 71.0 | 70.0 | 70.0 | 70.0 |
| Baryum sulphate | 372.0 | 372.0 | 400.0 | 340.0 | 432.0 |
| Diethylenglycol dimethylether | 50.0 | 50.0 | 50.0 | 50.0 | 50.0 |
| Dow Corning Additive 57 | 2.0 | 2.0 | 2.0 | 2.0 | 2.0 |
| Total | 1000.0 | 1000.0 | 1000.0 | 1000.0 | 1000.0 |

| Examples | S6 | S7 | S8 | S9 |
|---|---|---|---|---|
| | R=4.76 | R=3.39 | R=2.01 | R=3.07 |
| | r=0.60 | r=0.83 | r=0.756 | r=0.75 |
| Silvet 320-20-J | 50.0 | 50.0 | 50.0 | 50.0 |
| Cyracure UVR-6110 | 130.0 | 130.0 | 96.0 | 116.0 |
| Cyracure UVR-6105 | 88.0 | 103.0 | 76.0 | 96.0 |
| PolyTHF-650 | 110.0 | 165.0 | 206.0 | 166.0 |
| TiO2 | 100.0 | 100.0 | 100.0 | 100.0 |
| Cyracure UVI-6990 | 70.0 | 70.0 | 70.0 | 70.0 |
| Baryum sulphate | 400.0 | 330.0 | 350.0 | 350.0 |
| Diethylenglycol dimethylether | 50.0 | 50.0 | 50.0 | 50.0 |
| Dow Corning Additive 57 | 2.0 | 2.0 | 2.0 | 2.0 |
| Total | 1000.0 | 1000.0 | 1000.0 | 1000.0 |

Due to the particular pigment, the final viscosity of the silver ink was limited to 2 Pa s out of reasons of printability (the higher the viscosity, the smaller r). The inks with a viscosity lower 2 Pa's but with a R ratio higher than 5.0 are too hard to scratch off. For the silver ink R is kept between 2.0 and 5.0.

For excellent results ranges of r are between 0.6 and 0.85 in particular in combination with R-ranges of between 2.5 and 4.7. Still acceptable results are achieved with r beginning at 0.57 to 0.93 particularly in combination with an R-value ranging to 5.5 and starting at 2.0.

## Claims

1. Use of a coating composition for forming a scratch-off layer on a substrate to temporarily hide underlying information on that substrate which information will become visible upon removal of said layer, which composition comprises

    a) film forming components, comprising

        i) at least one first organic molecule having at least one epoxy group, and
        ii) at least one second organic molecule having at least one nucleophilic group being crosslinkable with said epoxy group of said first organic molecule upon irradiation with electromagnetic radiation in the ultraviolet range of the electromagnetic spectrum;

    b) components being insoluble in said coating composition, said components comprising at least one pigment;
    c) at least one photoinitiator;
    d) additives, and
    e) optionally at least one solvent

    wherein the weight ratio (r) of the film forming components to the insoluble components is in the range of between 0.35 to 0.95.

2. Use of a composition according to claim 1, **characterised in that** the ratio of the epoxy equivalents to the equivalents of the nucleophilic groups is not exceeding 5.5.

3. Use of a composition according to claim 1 or 2, **characterised in that** the pigment is selected from the group consisting of powder pigments, in particular black and white powder pigments.

4. Use of a composition according to claim 3, **characterised in that** the r-value is in the range of 0.4 to 0.7.

5. Use of a composition according to claim 3, **characterised in that** the equivalent ratio of the epoxy groups to the nucleophilic groups is in the range of between 1.5 to 4.5.

6. Use of a composition according to claim 3, **characterised in that** the equivalent ratio of the epoxy groups to the nucleophilic groups is in the range of between 2.0 to 4.0.

7. Use of a composition according to claim 3, **characterised in that** the equivalent ratio of the epoxy groups to the nucleophilic groups is in the range of between 2.5 to 3.5.

8. Use of a composition according to one of the claims 1 to 2, **characterised in that** the pigment is selected from the group consisting of flake pigments having first and second parallel planar surfaces.

9. Use of a composition according to claim 8, **characterised in that** the flake pigment is a lustre pigment.

10. Use of a composition according to claim 9, **characterised in that** the lustre pigment is a metal effect pigment.

11. Use of a composition according to one of the claims 8 to 10, **characterised in that** the r-value is in the range of between 0.55 to 0.85.

12. Use of a composition according to one of the claims 8 to 11 **characterised in that** the ratio of the epoxy equivalent to the equivalents of the nucleophilic groups is in the range of between 2.0 to 5.4.

13. Use of a composition according to one of the claims 1 to 12, **characterised in that** said second organic molecule comprises at least one hydroxy-group as nucleophilic group.

14. Use of a composition according to one of the claims 1 to 13, **characterised in that** the molecular weight of the first organic molecule is in the range of between 150 g/mol and 500 g/mol.

15. Use of a composition according to one of the claims 1 to 14, **characterised in that** the first organic molecule is selected from the group consisting of aliphatic epoxy monomers, cycloaliphatic epoxy monomers, aliphatic epoxy

oligomers and cycloaliphatic oligomers.

**16.** Use of a composition according to one of the claims 1 to 15, **characterised in that** the weight average molecular weight of the second organic molecule is in the range of 200 g/mol to 1000 g/mol.

**17.** Use of a composition according to one of the claims 1 to 16, **characterised in that** the second organic molecule is selected from the group consisting of aliphatic polyester polyols and polyether-polyols.

**18.** Use of a composition according to one of the claims 1 to 17, **characterised in that** the photoinitiator is capable of initiating a cationic polymerization mechanism and is selected from the group consisting of aryl-sulfonium and aryl-iodonium salts and isopropylthioxanthone and their derivatives.

**19.** Use of a composition according to one of the claims 1 to 18, **characterised in that** the additives further comprise at least one accelerator having a double bond in $\alpha$-position to an oxygen atom.

**20.** Use of a composition according to one of the claims 1 to 19, **characterised in that** said coating composition is a printing ink.

**21.** Use of a composition according to one of the preceding claims, **characterised in that** the viscosity of said coating composition is not exceeding 2.0 Pa.s, and that its solvent wt.% is not exceeding 10 wt.% of the weight of the composition.

**22.** Use of a composition according to one of the preceding claims, **characterised in that** the composition comprises 10 to 25 wt.-% of the first organic molecule having at least one epoxy group, 3 to 20 wt.-% of the second organic molecule having at least one nucleophilic group, and at least 40 to 70 wt.-% of at least one substance being insoluble in the composition.

**23.** A coating composition for forming a scratch-off layer on a substrate to temporarily hide information on that substrate which information will become visible upon removal of said layer, which composition comprises

a) film forming components, comprising

i) at least one first organic molecule having at least one epoxy group, and
ii) at least one second organic molecule having at least one nucleophilic group being crosslinkable with said epoxy group of said first organic molecule upon irradiation with electromagnetic radiation in the ultraviolet range of the electromagnetic spectrum;

b) components being insoluble in said coating composition, said components comprising at least one pigment;
c) at least one photoinitiator;
d) additives, and
e) optionally at least one solvent

wherein the weight ratio (r) of said film forming components to said insoluble components is in the range of between 0.35 to 0.95, wherein said coating composition is a printing ink having a viscosity which is not exceeding 2.0 Pa·s when measured at 20°C, and wherein the solvent content of the composition is not exceeding 10 wt.-% of the weight of the composition.

**24.** A composition according to claim 23, **characterized in that** said pigment is selected from the group consisting of flake pigments having first and second parallel planar surfaces.

**25.** A security document comprising at least one scratchable UV-cured layer for temporarily hiding underlying information, said layer being produced with a composition according to one the claims 23 to 24.

**26.** A method for temporarily hiding information on a document, comprising the steps of

a) providing a composition as defined in any one of the claims 1 to 24;
b) optionally applying a release varnish to the part of the document on which the composition will be applied;
c) printing the composition of step a) on the underlying document so as to hide underlying information;

d) curing the printed composition applied in step c) by irradiation with light having a wavelength in the range of between 240 nm and 420 nm.

## Patentansprüche

1. Verwendung einer Beschichtungszusammensetzung zur Ausbildung einer abreibbaren Schicht auf einem Substrat zum vorübergehenden Verdecken darunterliegender Informationen auf dem Substrat, die bei Entfernung der Schicht sichtbar werden, wobei die Zusammensetzung

   a) filmbildende Komponenten, umfassend

      i) mindestens ein erstes organisches Molekül mit mindestens einer Epoxidgruppe und
      ii) mindestens ein zweites organisches Molekül mit mindestens einer nucleophilen Gruppe, die bei Bestrahlung mit elektromagnetischer Strahlung im Ultraviolettbereich des elektromagnetischen Spektrums mit der Epoxidgruppe des ersten organischen Moleküls vernetzbar ist;

   b) in der Beschichtungszusammensetzung unlösliche Komponenten, die mindestens ein Pigment umfassen;
   c) mindestens einen Photoinitiator;
   d) Additive und
   e) gegebenenfalls mindestens ein Lösungsmittel

   enthält, wobei das Gewichtsverhältnis (r) der filmbildenden Komponenten zu den unlöslichen Komponenten im Bereich von 0,35 bis 0,95 liegt.

2. Verwendung einer Zusammensetzung nach Anspruch 1, **dadurch gekennzeichnet, daß** das Verhältnis der Epoxidäquivalente zu den Äquivalenten der nucleophilen Gruppen höchstens 5,5 beträgt.

3. Verwendung einer Zusammensetzung nach Anspruch 1 oder 2, **dadurch gekennzeichnet, daß** das Pigment aus der Gruppe bestehend aus Pulverpigmenten, insbesondere schwarzen und weißen Pulverpigmenten, stammt.

4. Verwendung einer Zusammensetzung nach Anspruch 3, **dadurch gekennzeichnet, daß** der r-Wert im Bereich von 0,4 bis 0,7 liegt.

5. Verwendung einer Zusammensetzung nach Anspruch 3, **dadurch gekennzeichnet, daß** das Verhältnis der Epoxidäquivalente zu den Äquivalenten der nucleophilen Gruppen im Bereich von 1,5 bis 4,5 liegt.

6. Verwendung einer Zusammensetzung nach Anspruch 3, **dadurch gekennzeichnet, daß** das Verhältnis der Epoxidäquivalente zu den Äquivalenten der nucleophilen Gruppen im Bereich von 2,0 bis 4,0 liegt.

7. Verwendung einer Zusammensetzung nach Anspruch 3, **dadurch gekennzeichnet, daß** das Verhältnis der Epoxidäquivalente zu den Äquivalenten der nucleophilen Gruppen im Bereich von 2,5 bis 3,5 liegt.

8. Verwendung einer Zusammensetzung nach Anspruch 1 oder 2, **dadurch gekennzeichnet, daß** das Pigment aus der Gruppe bestehend aus Plättchenpigmenten mit einer ersten und einer zweiten planaren Oberfläche, die zueinander parallel sind, stammt.

9. Verwendung einer Zusammensetzung nach Anspruch 8, **dadurch gekennzeichnet, daß** es sich bei dem Plättchenpigment um ein Glanzpigment handelt.

10. Verwendung einer Zusammensetzung nach Anspruch 8, **dadurch gekennzeichnet, daß** es sich bei dem Glanzpigment um ein Metalleffektpigment handelt.

11. Verwendung einer Zusammensetzung nach einem der Ansprüche 8 bis 10, **dadurch gekennzeichnet, daß** der r-Wert im Bereich von 0,55 bis 0,85 liegt.

12. Verwendung einer Zusammensetzung nach einem der Ansprüche 8 bis 11, **dadurch gekennzeichnet, daß** das Verhältnis der Epoxidäquivalente zu den Äquivalenten der nucleophilen Gruppen im Bereich von 2,0 bis 5,4 liegt.

**13.** Verwendung einer Zusammensetzung nach einem der Ansprüche 1 bis 12, **dadurch gekennzeichnet, daß** das zweite organische Molekül mindestens eine Hydroxylgruppe als nucleophile Gruppe enthält.

**14.** Verwendung einer Zusammensetzung nach einem der Ansprüche 1 bis 13, **dadurch gekennzeichnet, daß** das Molekulargewicht des ersten organischen Moleküls im Bereich von 150 g/mol bis 500 g/mol liegt.

**15.** Verwendung einer Zusammensetzung nach einem der Ansprüche 1 bis 14, **dadurch gekennzeichnet, daß** das erste organische Molekül aus der Gruppe bestehend aus aliphatischen Epoxidmonomeren, cycloaliphatischen Epoxidmonomeren, aliphatischen Epoxidoligomeren und cycloaliphatischen Epoxidoligomeren stammt.

**16.** Verwendung einer Zusammensetzung nach einem der Ansprüche 1 bis 15, **dadurch gekennzeichnet, daß** das gewichtsmittlere Molekulargewicht des zweiten organischen Moleküls im Bereich von 200 g/mol bis 1000 g/mol liegt.

**17.** Verwendung einer Zusammensetzung nach einem der Ansprüche 1 bis 16, **dadurch gekennzeichnet, daß** das zweite organische Molekül aus der Gruppe bestehend aus aliphatischen Polyesterpolyolen und Polyetherpolyolen stammt.

**18.** Verwendung einer Zusammensetzung nach einem der Ansprüche 1 bis 17, **dadurch gekennzeichnet, daß** der Photoinitiator zur Initiierung eines kationischen Polymerisationsmechanismus befähigt ist und aus der Gruppe bestehend aus Arylsulfonium- und Aryliodoniumsalzen und Isopropylthioxanthon und Derivaten davon stammt.

**19.** Verwendung einer Zusammensetzung nach einem der Ansprüche 1 bis 18, **dadurch gekennzeichnet, daß** die Additive ferner mindestens einen Beschleuniger mit einer Doppelbindung in $\alpha$-Stellung zu einem Sauerstoffatom umfassen.

**20.** Verwendung einer Zusammensetzung nach einem der Ansprüche 1 bis 19, **dadurch gekennzeichnet, daß** es sich bei der Beschichtungszusammensetzung um eine Druckfarbe handelt.

**21.** Verwendung einer Zusammensetzung nach einem der vorhergehenden Ansprüche, **dadurch gekennzeichnet, daß** die Viskosität der Beschichtungszusammensetzung höchstens 2,0 Pa.s beträgt und ihr Lösungsmittelgehalt höchstens 10 Gew.-%, bezogen auf das Gewicht der Zusammensetzung, beträgt.

**22.** Verwendung einer Zusammensetzung nach einem der vorhergehenden Ansprüche, **dadurch gekennzeichnet, daß** die Zusammensetzung 10 bis 25 Gew.-% des ersten organischen Moleküls mit mindestens einer Epoxidgruppe, 3 bis 20 Gew.-% des zweiten organischen Moleküls mit mindestens einer nucleophilen Gruppe und mindestens 40 bis 70 Gew.-% mindestens einer in der Zusammensetzung unlöslichen Verbindung enthält.

**23.** Beschichtungszusammensetzung zur Ausbildung einer abreibbaren Schicht auf einem Substrat zum vorübergehenden Verdecken darunterliegender Informationen auf dem Substrat, die bei Entfernung der Schicht sichtbar werden, enthaltend

a) filmbildende Komponenten, umfassend

i) mindestens ein erstes organisches Molekül mit mindestens einer Epoxidgruppe und
ii) mindestens ein zweites organisches Molekül mit mindestens einer nucleophilen Gruppe, die bei Bestrahlung mit elektromagnetischer Strahlung im Ultraviolettbereich des elektromagnetischen Spektrums mit der Epoxidgruppe des ersten organischen Moleküls vernetzbar ist;

b) in der Beschichtungszusammensetzung unlösliche Komponenten, die mindestens ein Pigment umfassen;
c) mindestens einen Photoinitiator;
d) Additive und
e) gegebenenfalls mindestens ein Lösungsmittel,

wobei das Gewichtsverhältnis (r) der filmbildenden Komponenten zu den unlöslichen Komponenten im Bereich von 0,35 bis 0,95 liegt, es sich bei der Beschichtungszusammensetzung um eine Druckfarbe mit einer Viskosität von höchstens 2,0 Pa.s bei 20°C handelt und der Lösungsmittelgehalt der Zusammensetzung höchstens 10 Gew.-%, bezogen auf das Gewicht der Zusammensetzung, beträgt.

**24.** Zusammensetzung nach Anspruch 23, **dadurch gekennzeichnet, daß** das Pigment aus der Gruppe bestehend aus Plättchenpigmenten mit einer ersten und einer zweiten planaren Oberfläche, die zueinander parallel sind, stammt.

**25.** Sicherheitsdokument mit mindestens einer abreibbaren UV-gehärteten Schicht zum vorübergehenden Verdecken darunterliegender Informationen, welche mit einer Zusammensetzung gemäß Anspruch 23 oder 24 hergestellt worden ist.

**26.** Verfahren zum vorübergehenden Verdecken von Informationen auf einem Dokument, bei dem man

a) eine Zusammensetzung gemäß einem der Ansprüche 1 bis 24 bereitstellt;
b) gegebenenfalls auf den Teil des Dokuments, auf den die Zusammensetzung aufgetragen werden wird, einen Trennlack aufbringt;
c) die Zusammensetzung aus Schritt a) so auf das darunterliegende Dokument aufdruckt, daß Informationen verdeckt werden; und
d) die in Schritt c) aufgebrachte aufgedruckte Zusammensetzung durch Bestrahlung mit Licht mit einer Wellenlänge im Bereich von 240 nm bis 420 nm härtet.

## Revendications

**1.** Utilisation d'une composition de revêtement pour former une couche à éliminer par grattage sur un substrat afin de cacher temporairement des informations sous-jacentes présentes sur ce substrat, lesquelles informations deviendront visibles lors de l'élimination de ladite couche, laquelle composition comprend

a) des composants de formation de film, comprenant

i) au moins une première molécule organique ayant au moins un groupe époxy, et
ii) au moins une seconde molécule organique ayant au moins un groupe nucléophile réticulable avec ledit groupe époxy de ladite première molécule organique lors d'une irradiation à l'aide d'un rayonnement électromagnétique dans la plage de l'ultraviolet du spectre électromagnétique ;

b) des composants insolubles dans ladite composition de revêtement, lesdits composants comprenant au moins un pigment ;
c) au moins un photo-initiateur ;
d) des additifs ; et
e) facultativement au moins un solvant,

le rapport en poids (r) des composants de formation de film sur les composants insolubles étant dans la plage allant de 0,35 à 0,95.

**2.** Utilisation d'une composition selon la revendication 1, **caractérisée en ce que** le rapport des équivalents époxy sur les équivalents groupes nucléophiles ne dépasse pas 5,5.

**3.** Utilisation d'une composition selon la revendication 1 ou 2, **caractérisée en ce que** le pigment est sélectionné dans le groupe constitué des pigments en poudre, en particulier des pigments en poudre blancs et noirs.

**4.** Utilisation d'une composition selon la revendication 3, **caractérisée en ce que** la valeur r est dans la plage allant de 0,4 à 0,7.

**5.** Utilisation d'une composition selon la revendication 3, **caractérisée en ce que** le rapport en équivalents des groupes époxy sur les groupes nucléophiles est dans la plage allant de 1,5 à 4,5.

**6.** Utilisation d'une composition selon la revendication 3, **caractérisée en ce que** le rapport en équivalents des groupes époxy sur les groupes nucléophiles est dans la plage allant de 2 à 4.

**7.** Utilisation d'une composition selon la revendication 3, **caractérisée en ce que** le rapport en équivalents des groupes époxy sur les groupes nucléophiles est dans la plage allant de 2,5 à 3,5.

**8.** Utilisation d'une composition selon l'une des revendications 1 et 2, **caractérisée en ce que** le pigment est sélectionné dans le groupe constitué des pigments lamellaires ayant des première et seconde surfaces parallèles planes.

**9.** Utilisation d'une composition selon la revendication 8, **caractérisée en ce que** le pigment lamellaire est un pigment de lustrage.

**10.** Utilisation d'une composition selon la revendication 9, **caractérisée en ce que** le pigment lustrant est un pigment à effet métallique.

**11.** Utilisation d'une composition selon l'une quelconque des revendications 8 à 10, **caractérisée en ce que** la valeur r est dans la plage allant de 0,55 à 0,85.

**12.** Utilisation d'une composition selon l'une quelconque des revendications 8 à 11, **caractérisée en ce que** le rapport des équivalents époxy sur les équivalents groupes nucléophiles est dans la plage allant de 2 à 5,4.

**13.** Utilisation d'une composition selon l'une quelconque des revendications 1 à 12, **caractérisée en ce que** ladite seconde molécule organique comprend au moins un groupe hydroxy en tant que groupe nucléophile.

**14.** Utilisation d'une composition selon l'une quelconque des revendications 1 à 13, **caractérisée en ce que** le poids moléculaire de la première molécule organique est dans la plage allant de 154 g/mole à 500 g/mole.

**15.** Utilisation d'une composition selon l'une quelconque des revendications 1 à 14, **caractérisée en ce que** la première molécule organique est sélectionnée dans le groupe constitué des monomères époxy aliphatiques, des monomères époxy cycloaliphatiques, des oligomères d'époxy aliphatiques et des oligomères cycloaliphatiques.

**16.** Utilisation d'une composition selon l'une quelconque des revendications 1 à 15, **caractérisée en ce que** le poids moléculaire moyen en poids de la seconde molécule organique est dans la plage allant de 200 g/mole à 1000 g/mole.

**17.** Utilisation d'une composition selon l'une quelconque des revendications 1 à 16, **caractérisée en ce que** la seconde molécule organique est sélectionnée dans le groupe constitué des polyester polyols aliphatiques et des polyéther polyols.

**18.** Utilisation d'une composition selon l'une quelconque des revendications 1 à 17, **caractérisée en ce que** le photoinitiateur est capable d'initier un mécanisme de polymérisation cationique, et est sélectionné dans le groupe constitué des sels d'aryl-sulfonium et d'aryl-iodonium, de l'isopropylthioxanthone et de leurs dérivés.

**19.** Utilisation d'une composition selon l'une quelconque des revendications 1 à 18, **caractérisée en ce que** les additifs comprennent en outre au moins un accélérateur ayant une double liaison en position $\alpha$ par rapport à un atome d'oxygène.

**20.** Utilisation d'une composition selon l'une quelconque des revendications 1 à 19, **caractérisée en ce que** ladite composition de revêtement est une encre d'impression.

**21.** Utilisation d'une composition selon l'une quelconque des revendications précédentes, **caractérisée en ce que** la viscosité de ladite composition de revêtement ne dépasse pas 2 Pa.s, et **en ce que** son pourcentage en poids de solvant ne dépasse pas 10 % en poids du poids de la composition.

**22.** Utilisation d'une composition selon l'une quelconque des revendications précédentes, **caractérisée en ce que** la composition comprend 10 à 25 % en poids de la première molécule organique ayant au moins un groupe époxy, 3 à 20 % en poids de la seconde molécule organique ayant au moins un groupe nucléophile, et au moins 40 à 70 % en poids d'au moins une substance insoluble dans la composition.

**23.** Composition de revêtement pour former une couche à éliminer par grattage sur un substrat afin de cacher temporairement des informations présentes sur ce substrat, lesquelles informations deviendront visibles lors de l'élimination de ladite couche, laquelle composition comprend

a) des composants de formation de film, comprenant

i) au moins une première molécule organique ayant au moins un groupe époxy, et
ii) au moins une seconde molécule organique ayant au moins un groupe nucléophile réticulable avec ledit groupe époxy de ladite première molécule organique lors d'une irradiation à l'aide d'un rayonnement électromagnétique dans la plage de l'ultraviolet du spectre électromagnétique ;

b) des composants insolubles dans ladite composition de revêtement, lesdits composants comportant au moins un pigment ;
c) au moins un photo-initiateur ;
d) des additifs ; et
e) facultativement au moins un solvant,

dans laquelle le rapport en poids (r) desdits composants de formation de film sur lesdits composants insolubles est dans la plage allant de 0,35 à 0,95, ladite composition de revêtement étant une encre d'impression ayant une viscosité qui ne dépasse pas 2 Pa.s lorsqu'elle est mesurée à 20°C, et la teneur en solvant de la composition ne dépassant pas 10 % en poids du poids de la composition.

**24.** Composition selon la revendication 23, **caractérisée en ce que** ledit pigment est sélectionné dans le groupe constitué des pigments lamellaires ayant des première et seconde surfaces parallèles planes.

**25.** Document de sécurité comportant au moins une couche durcie par la lumière ultraviolette (UV) à éliminer par grattage pour cacher temporairement des informations sous-jacentes, ladite couche étant produite avec une composition selon l'une des revendications 23 et 24.

**26.** Procédé pour cacher temporairement des informations sur un document, comprenant les étapes consistant à

a) se procurer une composition telle que définie dans l'une quelconque des revendications 1 à 24 ;
b) appliquer facultativement un verni de libération sur la partie du document sur laquelle la composition sera appliquée ;
c) appliquer par impression la composition de l'étape a) sur le document sous-jacent de manière à cacher des informations sous-jacentes ; et
d) durcir la composition appliquée par impression lors de l'étape c), par irradiation d'une lumière ayant une longueur d'onde dans la plage allant de 240 nm à 420 nm.

Fig. 1

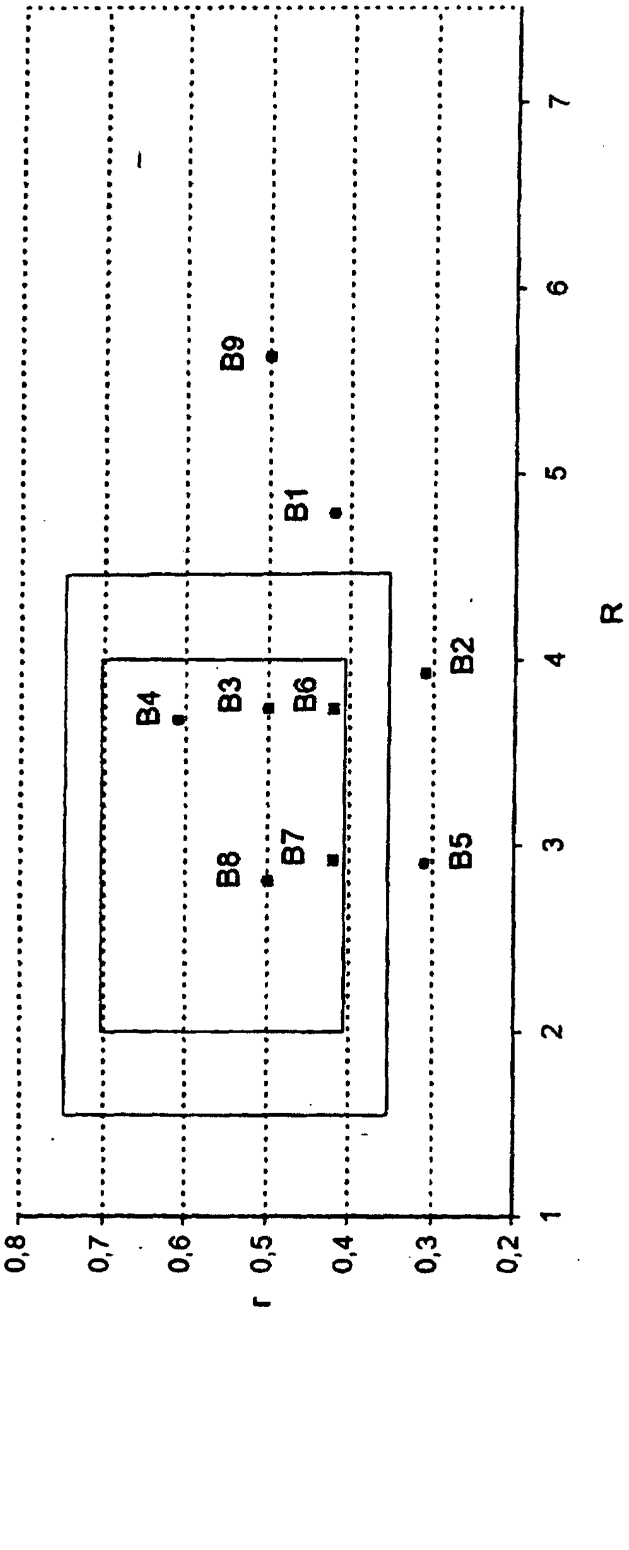

Fig. 2

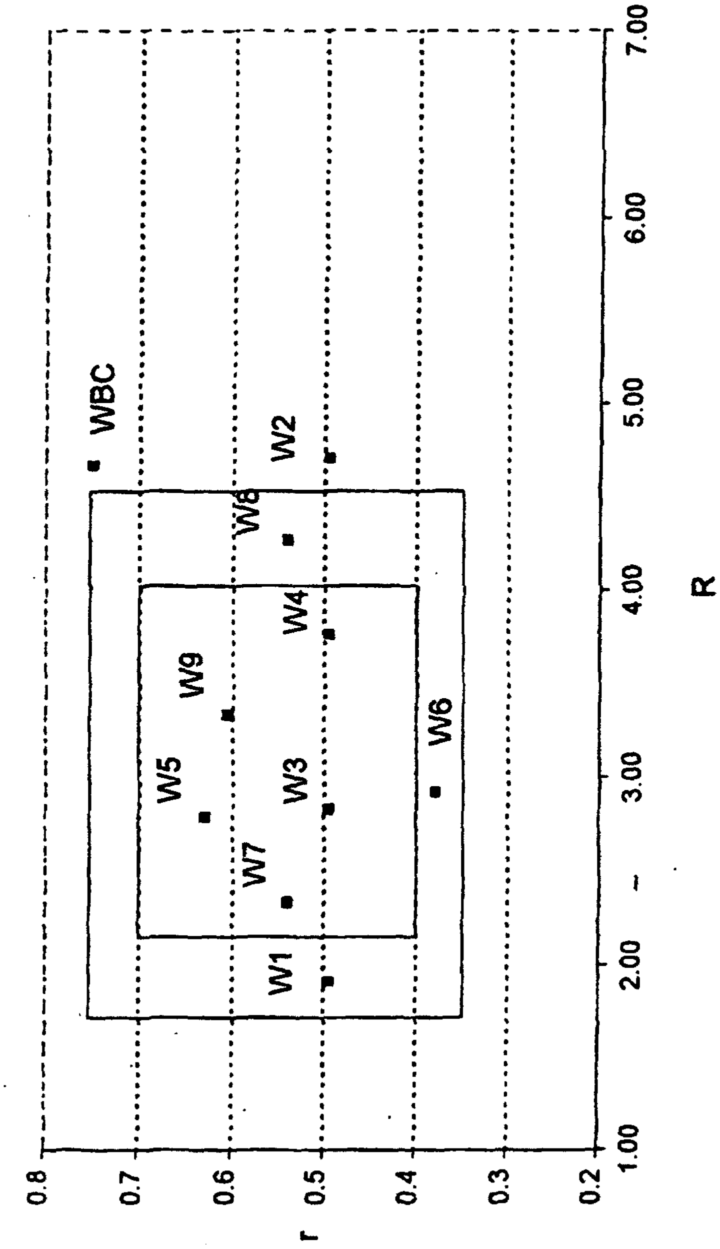
WBC
W2
W8
W4
W9
W6
W5
W3
W7
W1
r
R
0.8
0.7
0.6
0.5
0.4
0.3
0.2
1.00
2.00
3.00
4.00
5.00
6.00
7.00

Fig. 3